## Europäisches Patentamt

## European Patent Office

## Office européen des brevets

(19)

(11) Veröffentlichungsnummer: **0 012 888**
**B1**

(12) ## EUROPÄISCHE PATENTSCHRIFT

(45) Veröffentlichungstag der Patentschrift:
26.05.82

(51) Int. Cl.³: **H 03 K 13/22, H 04 J 3/04**

(21) Anmeldenummer: **79104893.7**

(22) Anmeldetag: **04.12.79**

(54) **Adaptiver Delta-Modulator.**

(30) Priorität: **20.12.78 US 971587**

(43) Veröffentlichungstag der Anmeldung:
**09.07.80 Patentblatt 80/14**

(45) Bekanntmachung des Hinweises auf die Patenterteilung:
**26.05.82 Patentblatt 82/21**

(84) Benannte Vertragsstaaten:
**AT DE FR GB**

(56) Entgegenhaltungen:
**DE-A1-2 724 347**
**US-A-3 937 897**
**US-A-4 042 921**

**IEEE SPECTRUM, Band 7, Heft 10, Oktober 1970 New York**
**H. R. SCHINDLER «Delta modulation» Seiten 69 bis 78**

(73) Patentinhaber: **International Business Machines Corporation, Armonk, N.Y. 10504 (US)**

(72) Erfinder: **Yin, Huo-Bing, 11400 Toulone Dr., Potomac, Maryland 20854 (US)**
Erfinder: **Hallett, Robert Joseph, 9250 Edwards Way Apt. 105, Adelphi, Maryland (US)**

(74) Vertreter: **Lewit, Leonard, Dipl.-Ing., Schönaicher Strasse 220, D-7030 Böblingen (DE)**

## Adaptiver Delta-Modulator

Die Erfindung bezieht sich auf die Übertragung von Analog-Signalen und insbesondere auf einen adaptiven Delta-Modulator zum Senden und Empfangen von Sprachsignalen, wobei ein Kompander vorgesehen ist, der die Modulationsschrittgrösse der Amplitude des analogen Eingangssignales anpasst.

In einem Delta-Modulationsübertragungssystem wird das zu übertragende Analogsignal digitalisiert, d.h. in eine Reihe von binären Ziffern umgewandelt. Beim Empfang kann aus dem empfangenen Bitstrom das ursprüngliche Analogsignal wieder gewonnen werden. Bei diesem Wiedergewinnungsprozess hat eine empfangene binäre Eins die Wirkung, dass die momentane Signalamplitude vergrössert wird, während eine empfangene binäre Null die Amplitude verringert. Die resultierende Schrittfunktion folgt der ursprünglichen Analogfunktion in einer angenäherten Weise. In der Sendestation der Delta-Modulationseinrichtung wird die Schrittfunktion in einer Rückführungsschleife aus dem ausgesendeten Bitstrom gewonnen und die Einhüllende dieser Schrittfunktion mit dem auszusendenden Analogsignal verglichen. Durch diesen Vergleich wird jeweils das auszusendende Bit bestimmt.

Da Sprachsignale einen weiten Amplitudenbereich einnehmen und auch rasche Amplitudenänderungen aufweisen, ist ein Kompander nötig, um ein tragbares Signal/Rausch-Verhältnis für alle Signalamplituden zu gewährleisten. In bekannten Delta-Modulationseinrichtungen sind bereits verschiedene Formen einer adaptiven Kompandierung für Sprachübertragungen verwendet worden. In diesen Einrichtungen wird die Schrittgrösse der wechselnden Amplitude des Eingangssignales angepasst und damit der dynamische Kompandierungsbereich des Codierers verbessert. Dabei ist es gebräuchlich, die Schrittgrösse zu vermindern, wenn sich das Eingangssignal wenig ändert und die Schrittgrösse zu erhöhen, wenn eine steile Amplitudenänderung vorliegt, um damit eine verbesserte Annäherung über einen weiten Bereich für Eingangsamplituden zu erzielen.

Mit den bekannten adaptiven Delta-Modulationseinrichtungen konnten jedoch eine Reihe von Problemen noch nicht zufriedenstellend gelöst werden. Hierbei geht es in erster Linie um das Quantisierungsrauschen und um Flankenüberlastungs-Erscheinungen. Das Quantisierungsrauschen wird bei der Abtastung des analogen Eingangssignales erzeugt. In einem Delta-Modulator wird ein solches Quantisierungsrauschen notgedrungen erzeugt, da der Differenzbetrag zwischen Eingangssignal und Rückführungssignal, welcher zur Erzeugung des binären Modulationssignales verwendet wird, in gewissen Grenzen variieren kann. Bei Verwendung der Delta-Modulation ist die Häufigkeit des Auftretens einer bestimmten binären Ziffer proportional der Flankensteilheit des analogen Eingangssignales. Erfolgt die Änderung des Eingangssignales sehr rasch, d.h. ist die Flankensteilheit sehr gross, so kann das aus dem Stufensignal gewonnene Rückführungssignal der Eingangsamplitude nicht mehr folgen und es wird eine Kette von binären Nullen, oder Einsen am Ausgang des Modulators abgegeben. Dieser Zustand wird mit «Flankenüberlastung» bezeichnet und verursacht zumeist weit grösseres Rauschen als das Quantisierungsrauschen und führt ausserdem zu Verzerrungen des Amplitudenverlaufes. Ausserdem wird durch die Flankenüberlastung das Einschwingverhalten verschlechtert.

Ein adaptiver Delta-Modulator ist aus «Electronics», 13. Oktober 1977, Seiten 86 bis 93, (insbesondere Fig. 7 auf Seite 90), bekanntgeworden. Darin wird die Grösse der vom digitalen Modulationssignal erzeugten Schritte dadurch der Eingangsamplitude des Analogsignals angepasst, dass die einem Schritte entsprechende Spannung von einem Kondensator abgenommen wird, der über einen Widerstand von einer bestimmten Spannung geladen wird. Diese Spannung hat einen oberen Wert, wenn drei aufeinanderfolgende binäre Einsen vorliegen, und andernfalls einen niedrigeren Wert. Beim Auftreten einer Kette von Einsen im Modulationssignal wird also von der bekannten Einrichtung die Schrittgrösse erhöht. Da jedoch die Schrittgrösse von einem Kondensator abgenommen wird und die Aufladung exponentiell erfolgt, kann nur eine asymptotisch angenäherte Maximalamplitude der Schritte erzielt werden.

In der US-PS 4 042 921 ist eine ähnliche Einrichtung beschrieben.

In der US-PS 3 937 897 ist ein adaptiver Deltamodulator gemäss dem Oberbegriff des Anspruchs 1 beschrieben. Bei zwei aufeinanderfolgenden gleichen Delta-Modulationsbits wird ein Schritterhöhungssignal abgegeben und bei zwei aufeinanderfolgenden ungleichen Delta-Modulationsbits wird ein Schritterniedrigungssignal abgegeben. Die Veränderung der Schrittgrösse erfolgt dabei logarithmisch, wobei sich benachbarte Schrittgrössen um den Faktor 2 unterscheiden. Dieses logarithmische Verhalten ist jedoch dann nachteilig, wenn sich die Sprachamplitude nur wenig ändert, da auch in einem solchen Falle die Schrittgrösse gleich um den Faktor 2 erhöht wird. Anderseits kann aber das genannte logarithmische Verhalten bei steilen Flanken noch unzureichend sein und es kann trotz dieses logarithmischen Verhaltens zu einer Flankenverzerrung kommen.

Der Erfindung liegt die Aufgabe zugrunde, eine Delta-Modulationseinrichtung mit einem adaptiven Kompander anzugeben, in der das Quantisierungsrauschen und die Flankenüberlastungs-Verzerrungen stark herabgesetzt werden.

Dies wird erfindungsgemäss durch die im Anspruch 1 gekennzeichneten Massnahmen erreicht.

Die Abhängigkeit der Schrittgrösse von den im Anspruch 1 genannten drei Kriterien verbessert die Adaptivität wesentlich und setzt die durch die Flankenüberlastung entstehenden Verzerrungen stark herab. Zugleich wird hierdurch das Quantisierungsrauschen vermindert und ein grösserer Kompandierungsbereich erzielt. Eine besonders effektive Erhöhung der Schrittgrösse wird durch Summation der vorhergehenden Schrittgrösse erreicht.

Die Erfindung ermöglicht auch eine gute Anpassung an den Spezialfall, dass die Amplitude des Eingangssignales sich zeitweise nicht ändert oder Null ist. Für den letzteren Fall kann eine spezielle Schaltung vorgesehen werden, welche eine minimale Schrittgrösse erzeugt. Dadurch ist zugleich ein definierter Ausgangspunkt beim plötzlichen Auftreten einer Flanke gegeben.

Nach einer Weiterbildung der Erfindung kann auch der Integrator und das nachfolgende Filter digital ausgeführt werden, wodurch die Möglichkeit geschaffen wird, die Einrichtung im Zeitmultiplex für eine Vielzahl von Anschlussleitungen zu betreiben. Im Kompander und im Integrator werden hierzu geeignete Speichereinrichtungen vorgesehen, welche die betreffenden Zwischenwerte während einer Zeitmultiplexperiode festhalten. Durch den Zeitmultiplexbetrieb wird eine wesentliche Einsparung an Schaltungselementen dadurch erzielt, dass die Modulationseinrichtung, welche den digitalen Kompander enthält, gemeinsam für eine Vielzahl von Anschlussleitungen verwendet werden kann. Durch die Ausführung des Integrators und des nachfolgenden Filters in digitaler Form wird ausserdem der Vorteil erzielt, dass durch Änderung der Polstellen des Filters die Funktionsweise der Einrichtung an das Frequenzspektrum des Eingangssignales angepasst werden kann.

Im folgenden wird die Erfindung anhand von einer lediglich einen Ausführungsweg darstellenden Zeichnung näher erläutert.

Es zeigt:
Fig. 1 eine adaptive Delta-Modulationseinrichtung,
Fig. 2 die Blockschaltung eines Kompanders,
Fig. 3 ein Doppelintegrationsfilter,
Fig. 4 die Rauschverhältnisfunktion der Einrichtung nach Fig. 1,
Fig. 5 eine adaptive Zeitmultiplex-Delta-Modulationseinrichtung und
Fig. 6 die zeitlichen Beziehungen zwischen Modulator und Demodulator für eine Einrichtung nach Fig. 5.

Die nachfolgend beschriebene Delta-Modulationseinrichtung enthält einen verbesserten digitalen Kompander und einen digitalen Integrator. Der Kompander erzeugt Modulationsschritte optimaler Grössen zur Modulation eines grossen Amplitudenbereiches des Analogsignales, wobei auch schnelle Anstiegs- oder Abfallzeiten des Signales erfasst werden können. Hierdurch wird eine starke Herabsetzung der Anstiegverzerrung und der Rauschstörungen bei einer Maximierung des Kompandierungsbereiches erreicht. Der rekonstruierte Amplitudenverlauf im Zeitgebiet wird durch Integration der optimalen Schrittgrössen durch einen digitalen Integrator erzielt, der z.B. aus einem Einzelpol- oder Doppelpol-Filter bestehen kann. Die Filterkonstanten können dabei so ausgewählt werden, dass das Filter an jedes Spektrum des Eingangssignales angeglichen werden kann. Beispielsweise kann es sich dabei um Sprachsignale oder analoge Modem-Signale niedriger Geschwindigkeit handeln. Die Delta-Modulationseinrichtung wird hierdurch unempfindlicher gegenüber Rauschen auf dem Übertragungskanal, wobei die Wirkungsweise der Einrichtung noch dadurch verbessert wird, dass das Quantisierungsrauschen herabgesetzt wird. Durch den Einbau von Speicherelementen in den digitalen Kompander und den digitalen Integrator kann die Delta-Modulationseinrichtung im Zeitmultiplex mit einer Vielzahl von Eingangs- und Ausgangs-Analogleitungen betrieben werden.

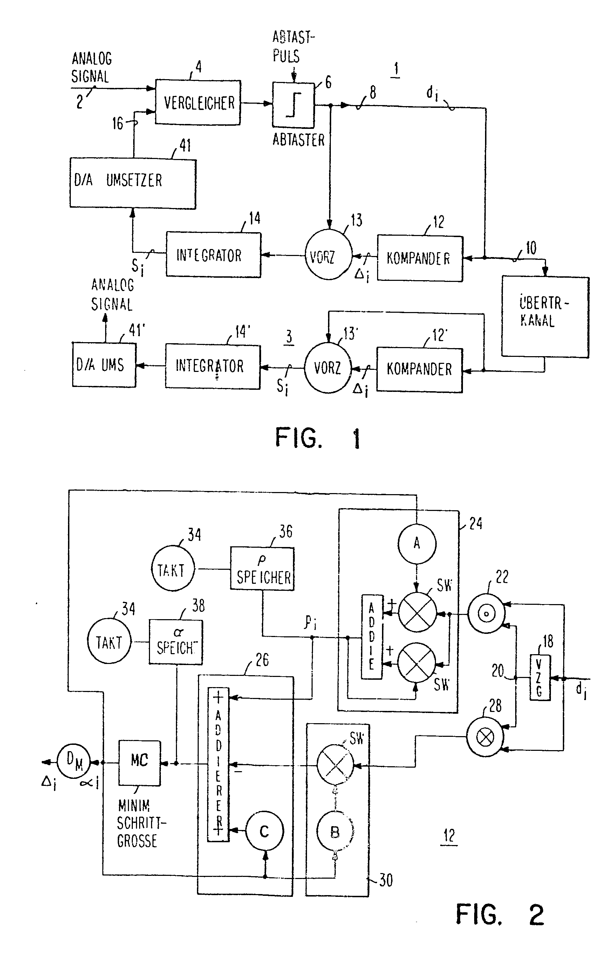

Fig. 1 zeigt eine schematische Darstellung der adaptiven Delta-Modulationseinrichtung. Der Analogeingang 2 ist mit einem Eingang des Analogsignal-Vergleichers 4 verbunden, dessen Ausgang mit einem periodischen Abtaster 6 verbunden ist, der an seinem Ausgang 8 ein deltamoduliertes Signal $d_i$ erzeugt, das über die Leitung 10 dem Übertragungskanal zugeführt wird. Dem Abtaster 6 werden ausserdem Abtastpulse zugeführt. Das Delta-Modulationssignal $d_i$ gelangt ausserdem an den Eingang eines Kompanders 12, dessen kompandiertes Ausgangssignal $\alpha_i$, durch eine Vorzeichenschaltung 13 modifiziert einem digitalen Integrator 14 zugeführt wird. Das Ausgangssignal des Integrators $S_i$ gelangt über einen Digital-Analog-Umsetzer 41 über die Leitung 16 zum zweiten Eingang des Analogsignal-Vergleichers 4. Der Vergleicher 4 vergleicht das analoge Eingangssignal 2 mit dem rekonstruierten Signal auf der Leitung 16 und erzeugt an seinem Ausgang eine binäre Eins, die ein positives Vorzeichen darstellt, wenn der Analogeingang grösser ist als das oder gleich ist dem Signal vom Umsetzer 41. Ist hingegen das Analogsignal kleiner als das rekonstruierte Signal, erzeugt der Vergleicher eine binäre Null an seinem Ausgang, die ein negatives Vorzeichen darstellt. Das Ausgangssignal des Vergleichers 4 wird vom Abtaster 6 periodisch abgetastet und der resultierende deltamodulierte Bitstrom gelangt über 10 und den Übertragungskanal zum Signalempfänger 3 der Delta-Modulationseinrichtung. Im Empfänger 3 wird das deltamodulierte Signal demoduliert, wozu der Empfänger die gleiche Schaltung enthält wie der Modulator 1, jedoch mit Ausnahme des Spannungsvergleichers 4 und des Abtasters 6. Der Demodulator 3 empfängt die deltamodulierten Bits und erzeugt ein Analogsignal, indem er die in dem Bitstrom enthaltene Information verwertet.

Als Hauptsteuerung in dieser Einrichtung ist die adaptive Kompandereinheit 12 vorgesehen. Um das Quantisierungsrauschen gering zu halten, d.h. um ein möglichst hohes Signal/Rausch-Verhältnis zu erzielen und um die Flankenüberlastungs-Verzerrung gering zu halten, weist der adaptive Kompander folgende Eigenschaften auf:

a) Die Schrittgrösse kann rasch erhöht oder verringert werden, um dem Beginn oder dem Ende von raschen Sprachamplitudenänderungen folgen zu können.

b) Die Schrittgrösse wird während der gleichmässig verlaufenden Perioden der Sprachtätigkeit in sanfter Weise erhöht, um den Einfluss des Grundrauschens zu vermindern.

c) Aus den gleichen Gründen wird die Schrittgrösse auch in kleinen Schritten in sanfter Weise herabgesetzt.

d) Zwischen der Schrittgrösse und der Amplitude des Eingangssignals besteht ein linearer Zusammenhang. Hierdurch wird ein maximaler Kompressionsbereich erzielt, über den ein gutes Rauschverhältnis sowohl für den leisen Sprecher als auch für den lauten Sprecher erzielt wird.

Fig. 2 zeigt das Blockschaltbild des Kompanders 12 der Delta-Modulationseinrichtung, welche die optimalen Schrittgrössen nach den oben genannten Kriterien erzeugt. Die verwendeten Bezugszeichen haben folgende Bedeutung:

A, B und C sind Konstanten zur Änderung der Schrittgrössen gemäss der erhaltenen Bitsequenz. Ihre Grösse ist < 1, wobei jedoch $(A+C) > 1$ und $(C-B) < 1$ sind.

$d_i$ und $d_{i-1}$ sind binäre Ziffern, welche zu den Zeitpunkten $t = i$ und $t = i-1$ erzeugt werden.

D stellt eine Verzögerungsstufe 18 mit einem Verzögerungsbetrag entsprechend einer Abtastperiode dar.

MC bezeichnet eine minimale Schrittgrösse, durch welche sichergestellt wird, dass die Schrittgrösse stetig vergrössert werden kann, wenn ein Eingangsanalogsignal anliegt und dass ein gut verarbeitbares Ruhesignal 1,0,1,0,... am digitalen Ausgang erscheint, wenn das Eingangssignal Null ist. Der Wert von MC entspricht dem niedersten Bit des Digital-Analog-Umsetzers.

DM gibt einen Verstärkungsfaktor an und stellt eine Konstante dar, welche die Amplitudenanpassungen zwischen dem Kompander und dem Integrator 14 erleichtern soll.

Die Erzeugung der Schrittgrössen hängt von den logischen Zuständen der Bitsequenz ab. Es gibt drei bestimmte Schrittgrössen, welche den folgenden Bedingungen entsprechen:

1. $d_i = d_{i-1}$,
2. $d_i \neq d_{i-1}$ und
3. $d_i = d_{i-1} = d_{i-2}... = d_0$, d.h. dass drei oder mehr aufeinanderfolgende gleiche Bits vorliegen.

Der Kompander 12 weist eine Verzögerungsschaltung 18 auf, welche zwischen dem Eingang des Kompanders 12 und dem Knoten 20 geschaltet ist. Ein Invertiertes Exklusiv-ODER-Glied 22 weist einen ersten Eingang auf, der mit dem Eingang des Kompanders 12 und einen zweiten Eingang, der mit dem Knoten 20 verbunden ist. Das Glied 22 erzeugt ein Ausgangssignal, wenn $d_i$ gleich ist $d_{i-1}$. Eine erste Recheneinheit 24 weist einen Steuereingang auf, der mit dem Ausgang des invertierten Exklusiv-ODER-Gliedes 22 verbunden ist sowie einen Rückkopplungseingang, der mit dem kompandierten Ausgangssignal gespeist wird. Die Recheneinheit 24 berechnet den Wert

$\rho_i = A \alpha_{i-1} + \rho_{i-1}$. Eine zweite Recheneinheit 26 weist einen ersten Eingang auf, der mit dem Ausgang der ersten Recheneinheit 24 verbunden ist sowie einen Rückkopplungseingang, der mit dem kompandierten Ausgangssignal gespeist wird. Der Ausgang der Recheneinheit 26 ist mit dem Ausgang des Kompanders verbunden, um das Produkt $C \alpha_{i-1}$ zu berechnen und dieses zu dem berechneten Wert von $\rho_i$ zu addieren. Die Summe wird als $\alpha_i$ ausgegeben, wenn gilt $d_i = d_{i-1}$.

Der Kompander 12 enthält ferner ein Exkluxiv-ODER-Glied 28, dessen erster Eingang mit dem Eingang des Kompanders 12 und dessen zweiter Eingang mit dem Knoten 20 verbunden ist. Das Glied 28 erzeugt ein Ausgangssignal, wenn $d_i$ nicht gleich ist $d_{i-1}$.

Eine dritte Recheneinheit 30 weist einen Steuereingang auf, der mit dem Ausgang des Exklusiv-ODER-Gliedes 28 verbunden ist sowie einen Rückführungseingang, welcher mit dem kompandierten Ausgangssignal gespeist wird. Der Ausgang der Recheneinheit 30 ist mit einem dritten Eingang der zweiten Recheneinheit 26 zur Berechnung des Wertes $B \alpha_{i-1}$ verbunden. Die zweite Recheneinheit 26 berechnet den Wert $(C-B) \alpha_{i-1}$ und gibt diesen Wert als $\alpha_i$ aus, wenn $d_i$ nicht gleich ist $d_{i-1}$.

Die genannten Steuereingänge sind in den Recheneinheiten 24 und 30 mit Schaltern SW zur Durchschaltung der benötigten Signale verbunden. Mit der gezeigten Einrichtung können die drei vom Kompander 12 erzeugten Schrittgrössen wie folgt dargestellt werden:

a) Wenn drei oder mehr aufeinanderfolgende gleiche Bits vorliegen gilt:

$$\Delta_i = DM \{(A+C) \alpha_{i-1} + \rho_{i-1}\} \quad \text{oder}$$

$$\Delta_i = DM \{(A+C) \alpha_{i-1} + A ( \sum_{n=i-2}^{0} \alpha_n)\} \quad (4)$$

Die Schrittgrössen unterliegen einer raschen Veränderung, wie durch die folgende Gleichung gezeigt werden soll. Wenn sieben aufeinanderfolgende gleiche Bits vorliegen kann $\Delta_6$ (t=6) aus Gleichung (4) wie folgt gewonnen werden:

$$\Delta_6 = DM \cdot \{(A+C)^6 + A[5(A+C)^4 + 4(A+C)^3 + 3(2A+1)(A+C)^2 + (6A+2)(A+C) + A^2 + 3A + 1]\} \cdot \alpha_0 \quad (5)$$

worin $\alpha_0 = MC$ (ursprüngliche minimale Schrittgrösse, gegeben durch die Minimalschrittschaltung).

Dies ist ein Polynom von $(A+C)$ und ist eine nicht lineare Funktion, welche die Schrittgrösseninkremente ergibt, wobei ein vorteilhafter Gebrauch gemacht wird von der Summation der vorhergehenden Werte von $\alpha$. Da jeder Term in diesem Polynom grösser ist als 1, nimmt die Schrittgrösse sehr schnell zu, wenn mehr als drei gleiche, aufeinanderfolgende Bits vorliegen. Hierdurch werden Flanken-Überlastungserscheinungen sehr stark vermindert.

b) Wenn nur zwei aufeinanderfolgende gleiche Bits vorliegen, wird von der Einrichtung $\rho_{i-1}$ Null gesetzt und die Gleichung (4) wird zu

$$\Delta_i = DM \cdot \{(A + C)\, \alpha_{i-1}\} \tag{6}$$

wodurch das Schrittgrösseninkrement wesentlich geringer ausfällt.

c) wenn zwei aufeinanderfolgende Bits ungleich sind, wird die Schrittgrösse zu

$$\Delta_i = DM \cdot \{(C{-}B)\, \alpha_{i-1}\} \tag{7}$$

Da die Schaltung 24 ausgeschaltet ist und das Exklusiv-ODER-Glied 28 ein Signal abgibt, werden die Gleichungen (6) und (7) verwendet, wenn das analoge Eingangssignal gleich ist dem Ausgangssignal des Digital-Analog-Umsetzers 41. Die Veränderung der Schrittgrösse ist also klein, während der Periode, in der das Eingangssignal dem Ausgangssignal des Umsetzers 41 folgt und hierdurch wird eine wesentliche Verringerung des Granularrauschens erzielt und somit ein hohes Signal/Rausch-Verhältnis erreicht. Zur Erzielung eines möglichst guten Resultats sollte die Konstante (A + C) etwas grösser als 1 und die Konstante (C–B) etwas kleiner als 1 sein.

Es soll darauf hingewiesen werden, dass ein Teil der niederwertigen Bits in den digitalen Berechnungen abgeschnitten wird. Die tatsächlich vom Kompander erzeugte Schrittgrösse ist deshalb geringfügig kleiner als der genauen Lösung der Gleichungen (4), (6) oder (7) entspricht. Die kleineren Vergrösserungen oder Verkleinerungen der Schrittgrösse während einer Periode, in der das Eingangssignal dem Ausgangssignal des Umsetzers 41 ziemlich genau folgt, ergeben weniger granulares Rauschen und deshalb ein besseres Signal/Rausch-Verhältnis. Der Kompander 12 ist hinsichtlich des Eingangssignales adaptiv, d.h. die Erzeugung der Schrittgrösse ist eine lineare Funktion des Eingangssignales und der Kompandierungsbereich der Einrichtung ist deshalb gross.

Es sollte weiter darauf hingewiesen werden, dass die Schaltung MC das Ausgangssignal des Kompanders bestimmt, wenn $\alpha_i$ kleiner ist als MC. In diesem Falle wird also $\alpha_i$ = MC gemacht. Hierdurch wird ein Ruhebitstrom erzielt, welcher ein gutes Verhalten der Einrichtung garantiert. Im vorliegenden Falle wird der Bitstrom 1,0,10,... vom digitalen Ausgang der Delta-Modulationseinrichtung erzeugt. Dieser Bitstrom entspricht einem periodischen Rechtecksignal mit einer Frequenz, welche gleich ist der Hälfte der Abtastfrequenz. Durch diesen Bitstrom wird ein minimales Rauschen am digitalen Ausgang der Einrichtung erzielt.

Durch die digitale Implementierung der Einrichtung wird es ermöglicht, im Zeitmultiplex-Verfahren mehrere Eingangsleitungen von einem einzigen Kompander zu bedienen und damit eine grosse Einsparung an Schaltungselementen zu erzielen. In der Einrichtung werden zu diesem Zwecke Speicherelemente vorgesehen. Ein erster Speicher 36 ist, wie in Fig. 2 gezeigt, mit dem Ausgang der ersten Recheneinheit 24 verbunden. Er weist einen Steuereingang auf, der mit dem Taktgenerator 34 verbunden ist. Der erste Speicher 36 speichert und liest aufeinanderfolgend Werte von $\rho_i$ für jede entsprechende Eingangsleitung.

Ein zweiter Speicher 38 ist mit dem Ausgang der zweiten Recheneinheit 26 verbunden und arbeitet ebenso wie der erste Speicher in zyklischer Weise, indem er die Werte $\alpha_i$ speichert und ausliest für jede der im Zeitmultiplex zugeordneten Eingangsleitungen. Auch hier erfolgt die zyklische Steuerung durch den Taktgenerator 34.

Zusammenfassend ergibt sich, dass die Arbeitsweise des in Fig. 2 gezeigten Kompanders auf den logischen Werten von aufeinanderfolgenden Bits basiert und eine Kombination ist einer 2-Bit- ($d_i = d_{i-1}$ oder $d_i \neq d_{i-1}$) und einer Multibit- ($d_i = d_{i-1} = d_{i-2} = d_{i-3} ...$) Arbeitsweise. Für den Fall von drei oder mehr aufeinanderfolgenden gleichen Bits gilt die Gleichung (4), wobei diese Funktionsweise im wesentlichen einer 3-Bitoperation entspricht.

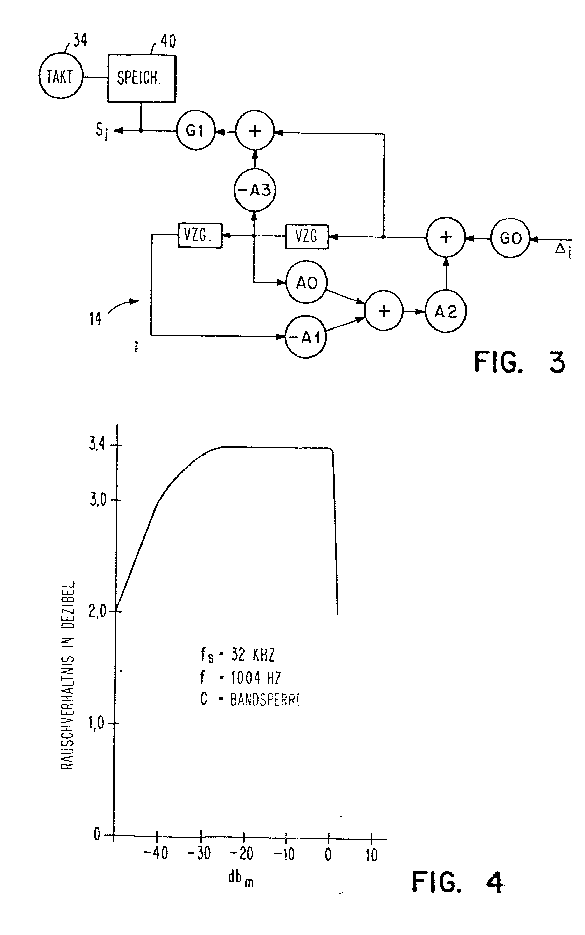

Die vom Kompander 12 zu verschiedenen Abtastzeitpunkten erzeugten Schrittgrössen müssen vom Integrator 14 integriert werden, um ein rekonstruiertes Signal zu ergeben. Das Vorzeichenbit von der Schaltung 13 stellt den digitalen Ausgang dar und steuert die Richtung des Sägezahns im Integrator 14. Der Integrator 14 kann auf eine der drei folgenden Weisen realisiert werden: Als perfekter Integrator, als Einzelintegrator (Tiefpassfilter mit einem Pol) oder als Doppelintegrator (Tiefpassfilter mit einem Nulldurchgang und zwei Polen). Es ist bekannt, dass ein zweipoliges Tiefpassfilter das Ausgangsrauschen vermindert. Es hat einen einzelnen Nulldurchgang und zwei Pole auf der realen Achse links von der S-Ebene und wird entweder in digitaler Form oder in analoger Form mit einem RC-Netzwerk implementiert. Hierzu kann auf «Philips Technical Review», Vol. 31, 1970, Seiten 335 bis 353 verwiesen werden. Es ist weiterhin bekannt, wie ein analoges Filter der beschriebenen Art in ein digitales Filter transformiert werden kann. Hierzu kann auf Proceedings of the IEEE, Vol. 55, Feb. 1967, Seiten 149 bis 171 verwiesen werden. Ein typisches digitales Filter zweiter Ordnung ist in Fig. 3 gezeigt. Es ist ein rekursives Filter in kanonischer Form.

Der beschriebene Aufbau gewährleistet die Funktionsstabilität der Rückkopplungsschleife sowie eine gute Anpassung an das Spektrum des Eingangssignales. Es soll darauf hingewiesen werden, dass der Decodierer eine offene Schleife aufweist, und dass die Nullstelle nicht notwendig ist und weggelassen werden kann.

Tabelle 1 gibt den Wert aller im Kompander nach Fig. 2 und im Integrator nach Fig. 3 verwendeten Konstanten für Sprachsignale wieder. Die Werte der Filterkonstanten $A_0$, $A_1$, $A_2$ und $G_1$ können für verschiedene Anwendungen dadurch optimiert werden, dass die Filtercharakteristiken dem Spektrum des Eingangssignales angepasst werden.

Die Funktion im Zeitgebiet wird durch den Digital/Analog-Umsetzer 41 in Fig. 1 in ein rekonstruiertes Analogsignal umgeformt. Der Umsetzer weist 11 Bits auf, in denen ein Vorzeichenbit inbe-

Tabelle I

| Konstante | Wert für Sprache |
|---|---|
| A | $\frac{1}{32}$ |
| B | $\frac{1}{64}$ |
| C | $\frac{63}{64}$ |
| MC | $\frac{1}{512}$ |
| DM | $\frac{1}{4}$ |
| $A_0$ | $(1+\frac{1}{2}+\frac{1}{4}+\frac{1}{8})$ |
| $A_1$ | $(\frac{1}{2}+\frac{1}{4}+\frac{1}{8})$ |
| $A_2$ | $\frac{31}{32}$ |
| $A_3$ | $(\frac{1}{2}+\frac{1}{8})$ |
| $G_1$ | 2 |
| $G_0$ | $\frac{1}{2}$ |

griffen ist. Die Register und der Addierer haben eine Breite von 14 Bits. Die Konstante G1 wird zur Anpassung der Amplituden zwischen den Eingang des Umsetzers 41 und dem Ausgang des Integrators benutzt.

Fig. 4 zeigt das Rauschverhältnis für einen 1004 Hz Testton der Delta-Modulationseinrichtung, welche den beschriebenen Kompander mit dem beschriebenen Integrator verwendet. Dabei wird eine Abtastrate von 32 kbps verwendet. Das gezeigte Rauschverhältnis ist wesentlich höher als das von den bekannten Einrichtungen mit derselben Abtastrate erzielte. Der Kompandierungsbereich ist beinahe gleich dem bekannten Bell-μ-Gesetz PCM mit μ-255 oder dem CCITT 13-Segment A-Gesetz Pulscodemodulator bei 56 kBaud.

Zur Erzielung einer Zeitmultiplex-Funktionsweise wird ein Speicher 40 mit dem Ausgang des Integrators 14 verbunden, wie in Fig. 3 gezeigt ist. Ein Steuereingang des Speichers wird mit dem Taktgenerator 34 verbunden, so dass eine zyklische Abspeicherung und ein zyklisches Auslösen der gespeicherten Werte der digitalen rekonstruierten Funktion vom Integrator 14 für die einzelnen Eingangssignalleitungen erzielt wird.

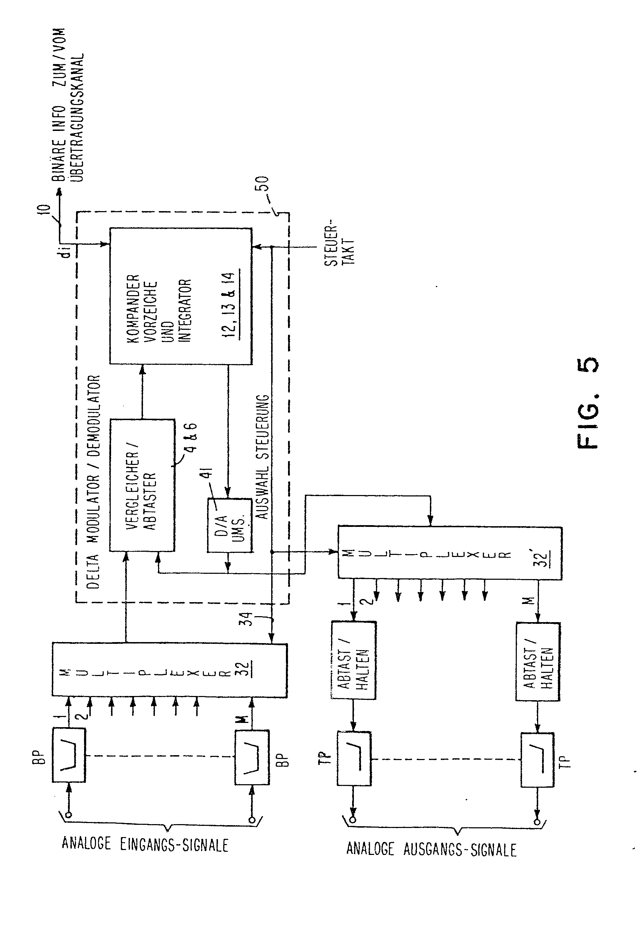

Durch die digitale Implementierung des beschriebenen Kompanders und Integrators wird eine Zeitmultiplex-Arbeitsweise für eine Vielzahl von M analogen Eingangs- und Ausgangssignalen ermöglicht und damit werden Schaltungselemente eingespart, wie Fig. 5 zeigt. Eingang und Ausgang teilen sich einen Delta-Modulator/Demodulator 50, welcher nur die mit 1 in Fig. 1 angegebene Einrichtung enthält. Die analogen Komponenten BP (Bandpassfilter), TP (Tiefpassfilter) und Abtast/Halten-Einrichtungen wurden in die Fig. 5 aufgenommen, um eine vollständige Implementierung und eine praktische Konfiguration der Analog/Digital-Umsetzung und Digital/-Analog-Umsetzung mit einer Delta-Modulationseinrichtung für mehrere Eingangs- und Ausgangsleitungen zu zeigen.

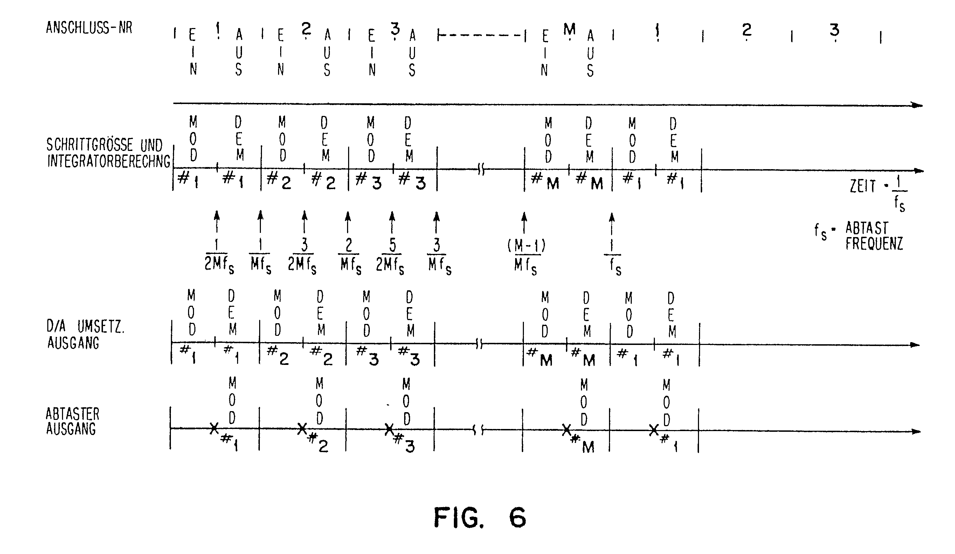

Wie in Fig. 6 gezeigt, steuert der Taktgenerator 34 die zur Modulation und Demodulation verfügbare Zeit. Die für die Modulation und Demodulation benötigten Funktionen müssen, ausgehend von den digitalen Ausgangssignalen des Abtasters und der digitalen Eingangssignale vom Übertragungskanal in einer Zeit 1/2Mf₅ für M Eingangs- und Ausgangsleitungen berechnet werden.

Das rekonstruierte Analogsignal am Ausgang des Digital-Analog-Umsetzers muss für den Modulator und Demodulator ebenfalls in derselben Zeitspanne verfügbar sein. Das Delta-Modulations-Ausgangssignal vom Abtaster 6 ist für die Übertragung nach einer Zeit 1/2 Mf₅ für den entsprechenden Anschluss verfügbar (siehe Fig. 6).

Mit der in Fig. 1 gezeigten adaptiven Delta-Modulationseinrichtung und dem in Fig. 2 gezeigten adaptiven Kompander wird ein grosser Kompandierungsbereich erzielt, indem Schrittgrössen adaptiv zur Amplitude des Eingangssignales erzeugt werden. Ausserdem wird ein besseres Rauschverhältnis dadurch erzielt, dass das Quantisierungsrauschen und das Flankenüberlastungsrauschen vermindert werden. Das verbesserte Rauschverhältnis ergibt sich aus der Methode zur Berechnung der Schrittgrössen in der Abtastoperation. Im kompandierten Delta-Modulator nach Fig. 1 wird die Schrittgrösse dynamisch durch Überwachung des Delta-Modulations-Stromes geändert. Dabei ist es wünschenswert für Ketten von Einsen oder Nullen die Schrittgrösse zu erhöhen, während Ketten von aufeinanderfolgenden Null/ Eins-Signalen die Schrittgrösse verringern.

Die auf diese Weise realisierte adaptive Delta-Modulationseinrichtung hat ein verbessertes Rauschverhältnis, ein vermindertes Quantisierungsrauschen, eine verminderte Flankenüberlastungs-Verzerrung, einen grossen Kompandierungsbereich, ein verbessertes dynamisches Antwortverhalten auf rasche Amplitudenänderungen und eine geringere Empfindlichkeit gegenüber Kanalrauschen.

**Patentansprüche**

1. Adaptiver Delta-Modulator mit einem Vergleicher (4) zum Vergleich des analogen Eingangssignales (2) mit einem analogen Rückführungssignal (16), mit einem Abtaster (6) zur Gewinnung des digitalen Modulationssignales $d_i$ aus dem Ausgangssignal des Vergleichers, sowie mit einem adaptiven Kompander (12) zur Erzeugung eines kompandierten Ausgangssignales $\alpha_i$ und einem nachfolgenden Integrator (14) zur Erzeugung des Rückführungssignales, wobei der Kompander digitale Vergleicher (22, 28) enthält, die feststellen, ob die zu zwei aufeinanderfolgenden Abtastzeitpunkten (i–1; i) gehörenden Modulationssignale $d_{i-1}$, $d_i$) gleich (22) oder ungleich (28) sind, dadurch gekennzeichnet, dass der Kompander (12) digitale Recheneinheiten (24, 26, 30) mit den folgenden Eigenschaften enthält:

$$\alpha_i = \{(C-B)\,\alpha_{i-1}\}, \text{ wenn } d_i \neq d_{i-1},$$
$$\alpha_i = \{(A+C)\,\alpha_{i-1}\}, \text{ wenn } d_i = d_{i-1}, \text{ und}$$
$$\alpha_i = \{(A+C)\,\alpha_{i-1}\} + A \cdot \left(\sum_{n=0}^{n=i-2} \alpha_n\right)$$

wenn $d_i = d_{i-1} = d_{i-2} = \ldots = d_0,$

worin A, B und C Konstanten kleiner als 1 sind,
A + C eine Konstante ist grösser als 1,
C–B eine Konstante ist kleiner als 1 und
$\alpha_i$ für i = O eine minimale Schrittgrösse darstellt.

2. Modulator nach Anspruch 1, dadurch gekennzeichnet, dass der Kompander (Fig. 2) die folgenden Einrichtungen aufweist:
- ein Verzögerungsglied (18) zwischen dem Eingang ($d_i$) des Kompanders und einem Schaltungsknoten (20), wobei die Verzögerung gleich ist der Zeit zwischen zwei Abtastpulsen (Abtaster 6, Fig. 1),
- ein invertiertes EXKLUSIV-ODER-Glied (22), dessen erster Eingang mit dem Eingang des Kompanders und dessen zweiter Eingang mit dem Schaltungsknoten (20) verbunden ist und dessen Ausgangssignal somit angibt, ob $d_i$ = $d_{i-1}$,
- eine erste Recheneinheit (24) deren Steuereingang mit dem Ausgang des EXKLUSIV/ODER-Gliedes verbunden ist und die einen Rückführungseingang aufweist, auf dem das kompandierte Signal ($\alpha_i$) erhalten wird, und die somit die Beziehung

$$\rho_i = A \sum_{n=0}^{i-1} \cdot \alpha_n$$

berechnet, und
- eine zweite Recheneinheit (26), deren erster Eingang mit dem Ausgang der ersten Recheneinheit verbunden ist und die einen Rückführungseingang aufweist, auf dem das kompandierte Ausgangssignal ($\alpha_i$) zugeführt wird und deren Ausgang den Ausgang des Kompanders darstellt, derart, dass das Produkt C $\alpha_{i-1}$ berechnet wird und zu dem Wert von $\rho_i$ hinzugefügt wird, wobei die Summe als $\alpha_i$ ausgegeben wird, wenn $d_i$ = $d_{i-1}$.

3. Modulator nach Anspruch 2, dadurch gekennzeichnet, dass der Kompander ausserdem die folgenden Einrichtungen aufweist:
- Ein EXKLUSIV/ODER-Glied (28), dessen erster Eingang mit dem Eingang ($d_i$) des Kompanders und dessen zweiter Eingang mit dem Schaltungsknoten (20) verbunden ist und das somit ein Ausgangssignal abgibt, wenn gilt: $d_i \neq d_{i-1}$,
- eine dritte Recheneinheit (30), deren Steuereingang mit dem Ausgang des EXKLUSIV/ODER-Gliedes (28) verbunden ist und das einen Rückführungseingang aufweist, der mit dem Ausgang ($\alpha_i$) des Kompanders verbunden ist, wobei der Ausgang der Recheneinheit (30) mit einem dritten Eingang der zweiten Recheneinheit (26) verbunden ist, derart, dass das Produkt B $\alpha_{i-1}$ berechnet wird und wobei die zweite Recheneinheit den Wert (C–B) $\alpha_{i-1}$ berechnet und diesen Wert als $\alpha_i$ ausgibt, wenn $d_i \neq d_{i-1}$.

4. Modulator nach Anspruch 2, gekennzeichnet durch einen Multiplexor (32, Fig. 5), der eine Vielzahl von analogen Eingangsleitungen mit dem Modulator (50) verbindet,
- durch erste Speichereinrichtungen (36, Fig. 2), die mit dem Ausgang der ersten Recheneinheit (24) verbunden sind und vom Abtasttakt (34) derart gesteuert werden, dass in zyklischer Weise die Werte $\rho_i$ für jede der entsprechenden Eingangsleitungen gespeichert und ausgelesen werden,
- durch zweite Speichereinrichtungen (38), die mit dem Ausgang der zweiten Recheneinheit (26) verbunden sind und ebenfalls von Abtasttakt (34) gesteuert werden, derart, dass die Werte $\alpha_i$ für jede der entsprechenden Eingangsleitungen gespeichert und ausgelesen werden,
- durch ein digitales Filter (14) und einen digitalen Integrator (Fig. 3) zur Umsetzung des kompandierten Ausgangssignales,
- durch Speichereinrichtungen (40), die mit dem Ausgang des Filters (14) verbunden sind und vom Abtasttakt (34) derart gesteuert werden, dass für die entsprechenden Eingangsleitungen die Werte vom Filter zyklisch gespeichert und ausgelesen werden, und
- durch einen Digital/Analog-Umsetzer (41) zur Umsetzung der digital gespeicherten Werte in Analogwerte zum Vergleich mit dem entsprechenden analogen Eingangssignal.

5. Modulator nach Anspruch 2, dadurch gekennzeichnet, dass zwischen den Ausgang der zweiten Recheneinheit (26) und den Ausgang ($\alpha_i$) des Kompanders eine Schaltung (MC) zur Erzeugung einer minimalen Schrittgrösse geschaltet ist.

6. Modulator nach Anspruch 4, dadurch gekennzeichnet, dass das digitale Filter (14) entweder einen einzelnen Pol, oder eine Nullstelle und ein Paar von Polen aufweist.

7. Modulator nach Anspruch 1, dadurch gekennzeichnet, dass die Konstante (A + C) geringfügig grösser, und die Konstante (C–B) geringfügig kleiner als 1 ist.

**Claims**

1. Adaptive delta modulator with compare means (4) to compare the analog input signal (2) with an analog reconstructed signal (16), with sampling means (6) to obtain the digital modulation signal $d_i$ from the output signal of the compare means, and with an adaptive compandor (12) to generate a companded output signal $\alpha_i$, and with a following integrator (14) to generate the reconstructed signal, the compandor comprising digital compare means (22, 28) to determine whether the modulation signals ($d_{i-1}$, $d_i$) of two successive sampling times (i–1; i) are equal (22) or non-equal (28), characterized in that the compandor (12) comprises digital arithmetic units (24, 26, 30) with the following characteristics:

$\alpha_i = \{(C–B)\ \alpha_{i-1}\}$, if $d_i \neq d_{i-1}$,
$\alpha_i = \{(A + C)\ \alpha_{i-1}\}$, if $d_i = d_{i-1}$, and

$$\alpha_i = \{(A + C)\ \alpha_{i-1}\} + A \cdot \left( \sum_{n=0}^{n=i-2} \alpha_n \right)$$

if $d_i = d_{i-1} = d_{i-2} = \ldots = d_o$,

A, B and C being constants smaller than 1,
A + C being a constant greater than 1,
C–B being a constant smaller than 1, and
$\alpha_i$ being a minimum step size for i = O.

2. Modulator as claimed in claim 1, characterized in that the compandor (Fig. 2) comprises the following:
- delay means (18) between the input ($d_i$) of the compandor and a circuit node (20), the delay equalling the time between two sampling pulses (sampling means 6, Fig. 1),
- an inverted exclusive OR gate (22) having its first input connected to the input of the compandor, and having its second input connected to the circuit node (20), its output signal thus indicating whether $d_i = d_{i-1}$,
- a first arithmetic unit (24) having its control input connected to the output of the exclusive OR gate, and comprising a feedback input supplying the companded signal ($\alpha_i$), and thus calculating the equation

$$\rho_i = A \sum_{n=0}^{i-1} \alpha_n$$

- and a second arithmetic unit (26) having its first input connected to the output of the first arithmetic unit, and comprising a feedback input on which the companded output signal ($\alpha_i$) is applied, and whose output represents the output of the compandor, in such a manner that the product $C\,\alpha_{i-1}$ is calculated and added to the value of $\rho_i$, the sum being outputted as $\alpha_i$ if $d_i = d_{i-1}$.

3. Modulator as claimed in claim 2, characterized in that the compandor also comprises the following:
- an exclusive OR gate (28) having its first input connected to the input ($d_i$) of the compandor, and having its second input connected to the circuit node (20), and which thus emits an output signal if: $d_i \neq d_{i-1}$,
- a third arithmetic unit (30) having its control input connected to the output of the exclusive OR gate (28), and comprising a feedback input which is connected to the output ($\alpha_i$) of the compandor, the output of the arithmetic unit (30) being connected to a third input of the second arithmetic unit (26) in such a manner that the product $B\,\alpha_{i-1}$ is calculated, and the second arithmetic unit calculating the value $(C-B)\,\alpha_{i-1}$ and outputting this value as $\alpha_i$ if $d_i \neq d_{i-1}$.

4. Modulator as claimed in claim 2, characterized by a multiplexor (32, Fig. 5) connecting a plurality of analog input lines of the modulator (50),
- by first storage means (36, Fig. 2) connected to the output of the first arithmetic unit (24) and being controlled by the scan clock (34) in such a manner that the values $\rho_i$ for each of the corresponding input lines are cyclically stored and read out,
- by second storage means (38) connected to the output of the second arithmetic unit (26) and also controlled by the scan clock (34) in such a manner that the values $\alpha_i$ for each of the corresponding input lines are stored and read out,
- by a digital filter (14) and a digital integrator (Fig. 3) to convert the companded output signal,

- by storage means (40) connected to the output of the filter (14) and controlled by the scan clock (34) in such a manner that for the corresponding input lines the values are cyclically stored and read out by the filter, and
- by a digital to analog converter (41) to convert the digital storage values into analog values to be compared with the corresponding analog input signal.

5. Modulator as claimed in claim 2, characterized in that between the output of the second arithmetic unit (26) and the output $\alpha_i$ of the compandor a circuit (MC) to generate a minimum step size is provided.

6. Modulator as claimed in claim 4, characterized in that the digital filter (14) has either one single pole, or a zero position and a pair of poles.

7. Modulator as claimed in claim 1, characterized in that the constant $(A+C)$ is slightly greater, and the constant $(C-B)$ is slightly smaller than 1.

**Revendications**

1. Modulateur delta adaptatif comportant un comparateur (4) pour comparer le signal d'entrée analogique (2) avec un signal de restauration analogique (16), un élément d'échantillonnage (6) pour obtenir le signal de modulation numérique $d_i$ à partir du signal de sortie du comparateur, ainsi qu'un compresseur adaptatif (12) pour générer un signal de sortie comprimé $\alpha_i$, et ensuite un intégrateur (14) pour générer le signal de restauration, le compresseur comportant des comparateurs numériques (22, 28) qui déterminent si les signaux de modulation ($d_{i-1}$, $d_i$) appartenant à deux instants d'échantillonnage successifs (i–1; i) sont égaux (22) ou inégaux (28), ledit modulateur étant caractérisé en ce que le compresseur (12) comporte des unités arithmétiques numériques (24, 26, 30) ayant les caractéristiques suivantes:

$\alpha_i = \{(C-B)\,\alpha_{i-1}\}$, si $d_i \neq d_{i-1}$,
$\alpha_i = \{(A+C)\,\alpha_{i-1}\}$, si $d_i = d_{i-1}$, et

$$\alpha_i = \{(A+C)\,\alpha_{i-1}\} + A \cdot \left( \sum_{n=0}^{n=i-2} \alpha_n \right)$$

si $d_i = d_{i-1} = d_{i-2} \ldots = d_0$,

A, B et C étant des constantes plus petites que 1,
$A+C$ étant une constante plus grande que 1,
$C-B$ étant une constante plus petite que 1, et
$\alpha_i$ pour $i = O$ étant une dimension de pas minimum.

2. Modulateur selon la revendication 1, caractérisé en ce que le compresseur (figure 2) comporte:
- un élément à retard (18) entre l'entrée ($d_i$) du compresseur et un noeud (20), le retard étant égal au temps entre deux impulsions d'échantillonnage (élément d'échantillonnage 6, figure 1),
- un élément OU Exclusif inversé (22) dont la première entrée est connectée à l'entrée du compresseur, et dont la seconde entrée est connectée au noeud (20) et dont le signal de sortie indique ainsi si $d_i = d_{i-1}$,

– une première unité arithmétique (24) dont l'entrée de commande est connectée à la sortie de l'élément OU Exclusif et qui comporte une entrée de restauration qui reçoit le signal comprimé ($\alpha_i$), et calcule ainsi la relation:

$$\rho_i = A \sum_{n=0}^{i-1} \alpha_n$$

– et une seconde unité arithmétique (26) dont la première entrée est connectée à la sortie de la première unité arithmétique et qui comporte une entrée de restauration à laquelle on applique le signal de sortie comprimé ($\alpha_i$) et dont la sortie constitue la sortie du compresseur de telle sorte que le produit C $\alpha_{i-1}$ est calculé et ajouté à la valeur de $\rho_i$, la somme étant donnée comme $\alpha_i$ lorsque $d_i = d_{i-1}$.

3. Modulateur selon la revendication 2, caractérisé en ce que le compresseur comporte en outre:

– un élément OU Exclusif (28) dont la première entrée est connectée à l'entrée ($d_i$) du compresseur et dont la seconde entrée est connectée audit noeud (20), et qui fournit ainsi un signal de sortie lorsque: $d_i \neq d_{i-1}$,

– une troisième unité arithmétique (30) dont l'entrée de commande est connectée à la sortie de l'élément OU Exclusif (28) et qui comporte une entrée de restauration connectée à la sortie ($\alpha_i$) du compresseur, la sortie de l'unité arithmétique (30) étant connectée à une troisième entrée de la seconde unité arithmétique (26) de telle sorte que le produit B $\alpha_{i-1}$ est calculé et la seconde unité arithmétique détermine la valeur (C–B) $\alpha_{i-1}$ et fournit cette valeur comme $\alpha_i$ lorsque $d_i \neq d_{i-1}$.

4. Modulateur selon la revendication 2, caractérisé par:

– un multiplexeur (32, figure 5) connectant une pluralité de lignes d'entrée analogiques au modulateur (50),

– des premières mémoires (36, figure 2) connectées à la sortie de la première unité arithmétique (24) et commandées par une horloge de balayage (34) de telle sorte que les valeurs $\rho_i$ pour chacune des lignes d'entrée correspondantes sont emmagasinées et lues de façon cyclique,

– des secondes mémoires (38) connectées à la sortie de la seconde unité arithmétique (26) et également commandées par l'horloge de balayage (34) de telle sorte que les valeurs $\alpha_i$ pour chacune des lignes d'entrée correspondantes sont emmagasinées et lues,

– un filtre numérique (14) et un intégrateur numérique (figure 3) pour convertir le signal de sortie comprimé,

– des mémoires (40) connectées à la sortie du filtre (14) et commandées par l'horloge de balayage (34) de telle sorte que pour les lignes d'entrée correspondantes les valeurs sont cycliquement emmagasinées et lues par le filtre, et

– un convertisseur numérique/analogique (41) pour convertir les valeurs emmagasinées numériquement en valeurs analogiques pour comparaison avec le signal d'entrée analogique correspondant.

5. Modulateur selon la revendication 2, caractérisé en ce qu'un circuit (MC) est connecté entre la sortie de la seconde unité arithmétique (26) et la sortie ($\alpha_i$) du compresseur pour générer une dimension de pas minimum.

6. Modulateur selon la revendication 4, caractérisé en ce que le filtre numérique (14) comporte soit un seul pôle soit une position zéro et une paire de pôles.

7. Modulateur selon la revendication 1, caractérisé en ce que la constante (A + C) est un peu plus grande et la constante (C–B) est un peu plus petite que 1.

FIG. 1

FIG. 2

FIG. 3

$f_s$ = 32 KHZ

$f$ = 1004 H7

C = BANDSPERRE

RAUSCHVERHÄLTNIS IN DEZIBEL

$db_m$

FIG. 4

FIG. 5

ANSCHLUSS-NR

| E I N | AUS | E I N | AUS | E I N | AUS | — — — — — | E I N | M AUS | 1 | 2 | 3 |

SCHRITTGRÖSSE UND INTEGRATORBERECHNG

| MOD #1 | DEM #1 | MOD #2 | DEM #2 | MOD #3 | DEM #3 | | MOD #M | DEM #M | MOD #1 | DEM #1 |

ZEIT $\cdot \dfrac{1}{f_S}$

$\dfrac{1}{2Mf_S}$  $\dfrac{1}{Mf_S}$  $\dfrac{3}{2Mf_S}$  $\dfrac{2}{Mf_S}$  $\dfrac{5}{2Mf_S}$  $\dfrac{3}{Mf_S}$  $\dfrac{(M-1)}{Mf_S}$  $\dfrac{1}{f_S}$

$f_S$ = ABTAST FREQUENZ

D/A UMSETZ. AUSGANG

| MOD #1 | DEM #1 | MOD #2 | DEM #2 | MOD #3 | DEM #3 | | MOD #M | DEM #M | MOD #1 | DEM #1 |

ABTASTER AUSGANG

| MOD #1 | MOD #2 | MOD #3 | MOD #M | MOD #1 |

# FIG. 6

0 012 888